# EUROPEAN PATENT SPECIFICATION

(11) **EP 0 398 743 B1**
(45) Date of publication and mention of the grant of the patent: **13.07.1994**
(21) Application number: 90305403.9
(22) Date of filing: 18.05.1990
(51) Int. Cl.: B60H 1/32, F25B 27/00, G05D 23/19, H02J 9/06

(54) **Refrigerating system for use in vehicles**
Kühlvorrichtung für die Verwendung in einem Fahrzeug
Système de réfrigération pour utilisation dans les véhicules

(30) Priority: 19.05.1989 JP 124517/89
(43) Date of publication of application: 22.11.1990
(73) Proprietor: SANDEN CORPORATION, Isesaki-shi Gunma, 372 (JP)
(72) Inventor: Isobe, Toshimi, 20 Kotobuki-cho, Isesaki-shi, Gunma 372 (JP); Sakano, Riichi, 20 Kotobuki-cho, Isesaki-shi, Gunma 372 (JP)
(74) Representative: Garratt, Peter Douglas

(56) References cited:
- GB-A- 2 215 494
- US-A- 3 512 373
- US-A- 3 885 398
- US-A- 4 015 182
- PATENT ABSTRACTS OF JAPAN vol. 08, no. 140 (M-305)(1577) 29 June 1984,
- & JP-A-59 37806 (MITSUBISHI) 01 March 1984,

## Description

### BACKGROUND OF THE INVENTION

### Field of the Invention

The present invention relates to a refrigerating system and, in particular, to a compressor driving system in such a refrigerating system for use in a vehicle with an engine, for example, an automotive refrigerator van.

### Description of the Prior Art

In order to cool, chill or refrigerate food, drinks, and/or others, a refrigerating system is provided in a vehicle, for example, an automobile. A dedicated vehicle is also known as a refrigerator van or chill car for transporting cold, chilled, or refrigerated food.

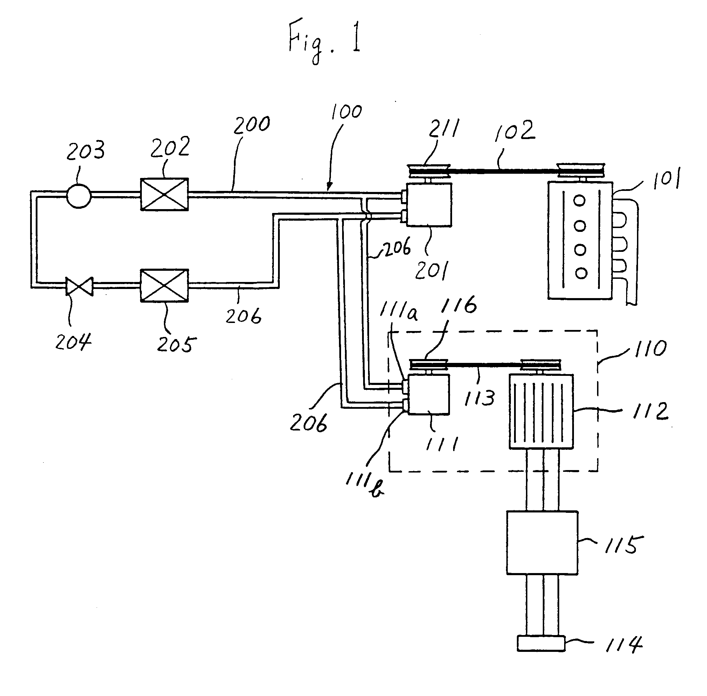

Figure 1 shows a schematic block diagram of a refrigerating system in accordance with one prior art system.
The refrigerating system 100 includes refrigerant circuit 200 comprising first compressor 201 for compressing refrigerant, condenser 202, receiver-drier 203, expansion valve 204, evaporator 205 for cooling a refrigerator compartment (not shown) and pipe members 206 for connecting an outlet of each of the elements of the refrigerant circuit to an inlet of each of adjacent elements of the refrigerant circuit. First compressor 201 is provided with electromagnetic clutch 211 for intermittently receiving the driving force thereof from automotive engine 101 through belt 102 by virtue of the intermittent operation of electromagnetic clutch 211. Thereby, first compressor 201 is intermittently driven by automotive engine 101 through electromagnetic clutch 211.

Refrigerating system 100 further comprises the so-called standby unit 110 including second compressor 111 and three-phase motor 112 for driving second compressor 111 through belt 113. Outlet port 111a of second compressor 111 is connected to the pipe member between first compressor 201 and condenser 202 through pipe member 206. Inlet port 111b of second compressor 111 is connected to the pipe member between evaporator 205 and first compressor 201 through pipe member 206. Three-phase motor 112 is connected to commercial AC electric power source 114 through power source box 115. Power source box 115 functions as both a rectifier and transformer in order to supply the electric power to an electric equipment incorporated in the elements of the refrigerant circuit, for example, an evaporator fan motor (not shown). But, motor 112 directly receives commercial AC electric power as the input thereof.

Furthermore, second compressor 111 is provided with electromagnetic clutch 116 for intermittently receiving the driving force thereof from motor 112 through belt 113 by virtue of the intermittent operation of electromagnetic clutch 116. Thereby, second compressor 111 is intermittently driven by motor 112 through electromagnetic clutch 116.

Accordingly, temperature control in the refrigerator compartment is carried out by the intermittent operation of electromagnetic clutch 211 or 116.

In this composition of the refrigerating system, during the period when the automobile is driven, first compressor 201 driven by the automotive engine only operates in order to circulate the refrigerant through refrigerant circuit 200. On the other hand, during the period when the automobile stops, for example, when the driver is sleeping through the night, second compressor 111 driven by motor 112 only operates instead of first compressor 201.

However, in this prior art, the additional provision of second compressor 111 of standby unit 110 complicates piping of the refrigerant circuit.

Further, it is difficult to carry out accurate temperature control in the refrigerator compartment because that the refrigerant compressor is driven by the engine which often varies in the rotational speed when automobile is driven.

To eliminate these drawbacks, another refrigerating system is proposed. The refrigerating system comprises a refrigerant circuit including a compressor having a three-phase motor and a compressing mechanism driven by the three-phase motor. The motor and the compressing mechanism are hermetically contained in one casing. In this refrigerating system, during the period when the automobile is driven, the motor of the compressor is connected to an automotive generator driven by the automotive engine so as to receive the AC electric power. Thereby, the compressor is driven by the motor driven by receiving the AC from the generator. On the other hand, during the period when the automobile stops, the motor of the compressor is connected to the commercial AC electric power source instead of the automotive generator so as to receive the commercial AC electric power from the AC electric power source. Thereby, the compressing mechanism of the compressor is driven by the motor which is driven by receiving the commercial AC electric power. Furthermore, temperature in the refrigerator compartment is controlled by the turning on-off operation of the generator or the commercial AC electric power source. That is, temperature in the refrigerator compartment is controlled by the intermittent operation of the motor of which rotational speed is maintained at the certain value.

However, since the temperature in the refrigerator compartment is controlled by the intermittent operation of the motor of which rotational speed is maintained at the certain value, it is still difficult to carry out accurate temperature control in the refrigerator compartment.

Another known system is shown in US-A-3885398. In this system, two refrigerant compressors are provided, one mechanically driven from the vehicle's engine, and the other electrically driven either from an on-board generator powered by an auxiliary engine, or from an external mains supply.

### SUMMARY OF THE INVENTION

Accordingly, it is an object of the preferred embodiment of the present invention to carry out accurate temperature control in the refrigerator compartment. It is another object of the preferred embodiment of the present invention to reduce the fuel consumption of the automotive engine when the compressor is driven by the motor which is driven by AC electric power supplied from the automotive generator.

According to the present invention, there is provided a system for driving a refrigerant compressor in a refrigerator system for use in a vehicle having an engine, which comprises:
an electric generator to be mounted on said vehicle and driven by said engine for generating AC electric power,
selecting means having a first input port coupled to said electric generator for receiving AC electric power therefrom, a second input port to be connected to an AC electric power source external of the vehicle for receiving AC electric power therefrom and an output port, said selecting means selecting either electric power from said generator or AC electric power from said external AC electric power source to deliver the selected AC electric power to said output port; and characterised by
rectifying means coupled to said output port of the selecting means for rectifying said selected AC electric power to produce DC electric power;
a DC electric motor to be driven by said DC electric power and mechanically coupled to said refrigerant compressor;
sensing means for sensing a temperature within a refrigerator compartment mounted on said vehicle, said sensing means producing a first signal which represents said sensed temperature of said refrigerator compartment;
setting means for setting a temperature of said refrigerator compartment, said setting means producing a second signal which represents said set temperature of said refrigerator compartment;
calculating means coupled to said sensing means, said setting means and said selecting means so as to receive said first and second signals and a third signal which indicates which of said AC electric power from said electric generator or said AC electric power from said external AC electric power source is delivered as the selected AC electric power to said output port, said calculating means calculating a differential between said sensed temperature of said refrigerator compartment and said set temperature of said refrigerator compartment, and producing a fourth signal representing said differential between said sensed temperature of said refrigerator compartment and said set temperature of said refrigerator compartment,
duty ratio control means coupled to said calculating means for receiving said third and fourth signals, said duty ratio control means including pulsating means for producing a pulse as a fifth signal, the duty ratio of the pulses being varied in response to change in said fourth signal when said duty ratio control means receives said third signal indicating that said AC electric power from said external AC electric power source is delivered to said output port, said duty ratio being maintained at 100% when said duty ratio control means receives said third signal representing that the AC electric power from said electric generator is delivered to said output port; and
delivering means coupled to said duty ratio control means for receiving said fifth signal, said delivering means delivering said DC electric power to said DC motor with intermissions, the duration of which is varied in response to change in said duty ratio.

The calculating means may be further coupled to said DC motor so as to receive a sixth signal representing a rotational speed of said DC motor so that said calculating means produces said fourth signal in consideration of said sixth signal.

Amperage control means may be coupled to said calculating means for receiving said third and fourth signals, said amperage control means being further coupled to said electric generator so as to control a direct current supplied to a field coil thereof in response to said fourth signal. Said delivering means may be coupled to said amperage control means so as to send a seventh signal representing a voltage of said DC electric power so that said amperage control means controls said field current in response to both said fourth signal and said seventh signal.

### BRIEF DESCRIPTION OF THE DRAWINGS

The invention will now be described merely by way of example with reference to the remainder of the drawings, wherein

Figure 2 is a schematic diagram of a refrigerating system in accordance with one embodiment of the present invention.

Figure 3 is a block diagram of a control system which is used for controlling the rotational speed of a DC brushless motor of a refrigerant compressor of the refrigerating system.

Figure 4 is a graph showing a relation between the electric power generated at an automotive generator and the rotational speed of the DC brushless motor of the refrigerant compressor.

Figure 5 is a graph showing voltage-amperage characteristic of the AC electric power generated at the automotive generator and a generating efficiency of the automotive generator when the rotational speed of the automotive generator is maintained at a certain value.

Figure 6 is a graph showing a relation between a value of the duty ratio signal generated at a duty ratio circuit and the rotational speed of the DC brushless motor of the refrigerant compressor.

### DETAILED DESCRIPTION OF THE PREFERRED EMBODIMENT

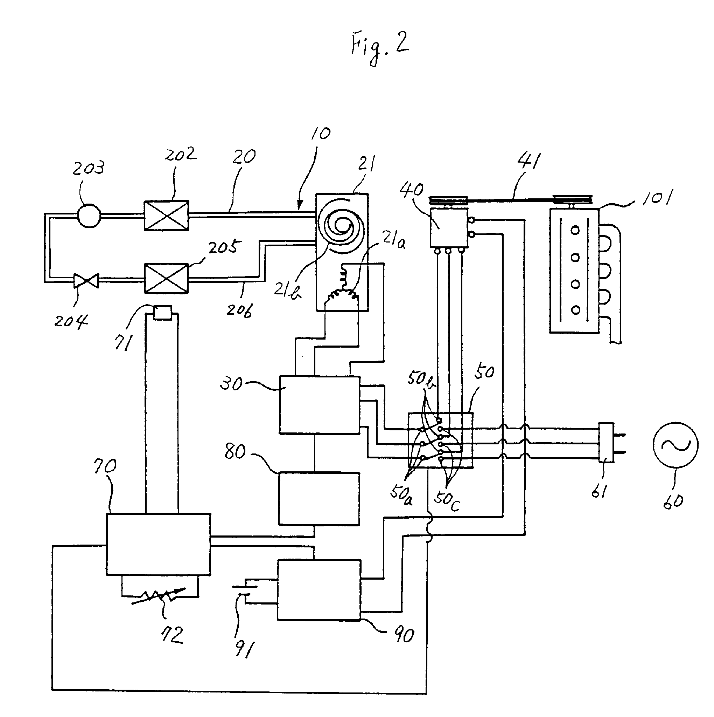

Figure 2 shows a schematic block diagram of a refrigerating system in accordance with one embodiment of the present invention. In the drawing, same numerals denote the corresponding elements shown in Figure 1 so that substantial explanation thereof is omitted.

With reference to Figure 2, the refrigerating system 10 includes refrigerant circuit 20 comprising compressor 21, condenser 202, receiver-drier 203, expansion valve 204, evaporator 205 and pipe members 206. Compressor 21 includes DC brushless motor 21a and scroll type compressing mechanism 21b driven by motor 21a. Motor 21a and compressing mechanism 21b are hermetically contained in one casing (not shown). DC brushless motor 21a is connected to circuit 30 which includes a rectifying device (not shown). Circuit 30 is further connected to terminals 50a of electromagnetic changeover switch 50 which includes an electromagnetic device (not shown). Generator 40 is mounted on an automotive engine compartment, and is driven by automotive engine 101 through belt 41. Generator 40 is connected to terminals 50b of switch 50. Plug 61 is connected to terminals 50c of switch 50. During the period when the automobile stops, plug 61 is inserted in commercial AC power source 60 so that the electromagnetic device is energized. Thereby, terminals 50a is connected to terminals 50c. Consequentially, the commercial AC electric power is supplied to circuit 30. On the other hand, during the period when the automobile is driven, plug 61 is detached from commercial AC power source 60 so that the electromagnetic device is not energized. Thereby, terminals 50a is disconnected to terminals 50c, and is simultaneously connected to terminals 50b as shown in Figure 2. Consequentially, the AC electric power generated at generator 40 is supplied to circuit 30.

Accordingly, the AC electric power generated at generator 40 and the commercial AC electric power are selectively supplied to circuit 30 in response to the connection and disconnection of plug 61 to commercial AC power source 60, and is rectified thereat. The rectified electric power at circuit 30 is supplied to DC brushless motor 21a of compressor 21 with intermission of which value varies in response to change in an value of later mention duty ratio signal.

Thermo-sensor 71 is disposed in a refrigerator compartment (not shown)so as to sense the real temperature in the refrigerator compartment, and is connected to arithmetic circuit 70 so as to send a first signal representing the real temperature in the refrigerator compartment to arithmetic circuit 70 therefrom. Device 72 for setting the certain temperature in the refrigerator compartment is also connected to arithmetic circuit 70 so as to send a second signal representing the set temperature in the refrigerator compartment to arithmetic circuit 70 therefrom. Arithmetic circuit 70 is further connected to both duty ratio control circuit 80 and amperage control circuit 90 so as to send later mention third and fourth signals to each of circuits 80 and 90 therefrom. Arithmetic circuit 70 is still further connected to electromagnetic changeover switch 50 so as to receive a third signal from switch 50. The third signal represents that whether the electromagnetic device of switch 50 is energized. Duty ratio control circuit 80 is further connected to circuit 30 so as to send the later mention duty ratio signal to circuit 30 therefrom. Amperage control circuit 90 is further connected to a field coil (not shown) of generator 40, and is still further connected to DC power source 91, such as a DC battery, so as to supply various amperage of the DC electric power to the field coil of generator 40 therefrom.

With reference to Figure 3 additionally, arithmetic circuit 70 receives the first, second and third signals from thermo-sensor 71, temperature setting device 72 and electromagnetic changeover switch 50, respectively. When arithmetic circuit 70 receives these three signals, the first and second signals are compared so as to calculate a fourth signal which represents the differential between the real and set temperatures. After that, the third and fourth signals are sent to both amperage control circuit 90 and duty ratio control circuit 80 therefrom. Duty ratio control circuit 80 includes a pulsating device which generates a pulse as a fifth signal.

When duty ratio control circuit 80 receives the third signal representing that the electromagnetic device of changeover switch 50 is not energized, duty ratio control circuit 80 generates a pulse as a fifth signal of which duty ratio is maintained 100 %, and then sends the fifth signal to circuit 30 therefrom. When circuit 30 receives the duty ratio 100% signal from duty ratio control circuit 80, the rectified electric power supplied through circuit 30 from generator 40 is continuously supplied to DC brushless motor 21a.

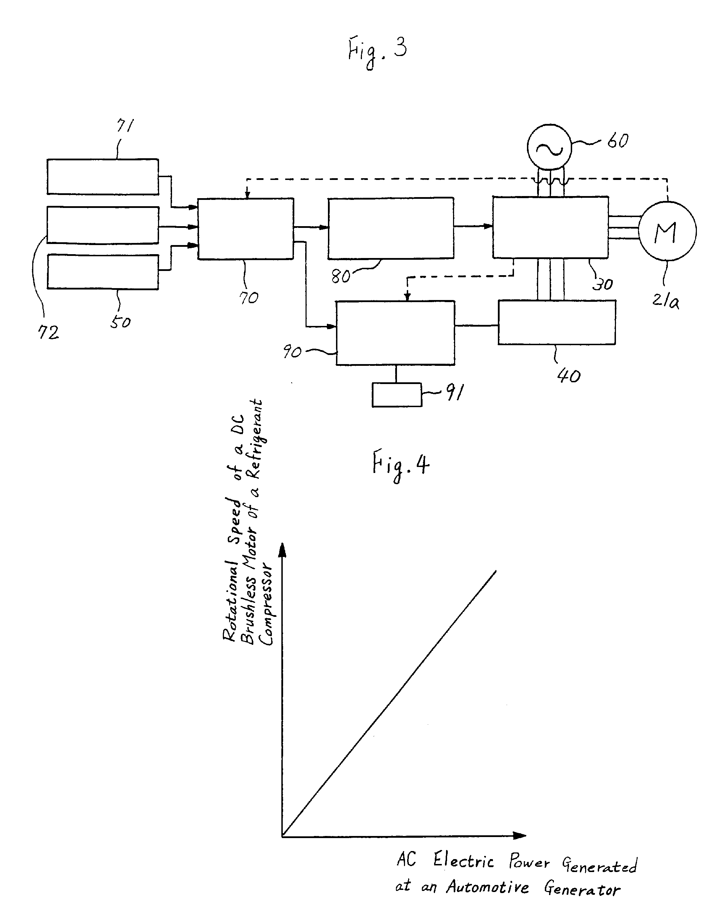

At the same time, amperage control circuit 90 controls the amperages of the DC electric power which is supplied from DC power source 91 to the field coil of generator 40 in response to change in the fourth signal. Thereby, generator 40 generates the various AC electric power in response to change in the amperage of the DC electric power supplied from DC power source 91, that is, generator 40 generates the various AC electric power in response to change in the fourth signal. The various AC electric power is supplied to circuit 30 so as to be the corresponding rectified electric power. Therefore, the rotational speed of DC brushless motor 21a of compressor 21 can be proportional to the value of the AC electric power generated at generator 40 as shown in Figure 4.

During the period when DC brushless motor 21a of compressor 21 is driven, a sixth signal representing the rotational speed of motor 21a is fed back from motor 21a to arithmetic circuit 70 through a wire (not shown in Figure 2). Accordingly, arithmetic circuit 70 calculates the fourth signal in consideration of the sixth signal. Further, a seventh signal representing the voltage of the rectified electric power is fed back from circuit 30 to amperage control circuit 90 through a wire (not shown in Figure 2). Accordingly, circuit 90 controls the amperage of the DC electric power which is supplied from DC power source 91 to the field coil of generator 40 in response to change in the fourth signal and in consideration of the seventh signal.

Figure 5 is a graph showing voltage-amperage characteristic of the AC electric power generated at automotive generator 40 and a generating efficiency of automotive generator 40 when the rotational speed of generator 40 is maintained at a certain value. In the graph, curves A, B and C show the voltage-amperage characteristic of the AC electric power generated at generator 40 in each of certain three amperages of the DC electric power supplied from DC power source 91 to the field coil of generator 40. Furthermore, curves A′, B′ and C′ show the generating efficiency of generator 40 in each of the above-mentioned three amperages. The amperage which generates curves C and C′ is greater than the amperage which generates curves B and B′, which is greater than the amperage which generates curves A and A′.

With reference to Figure 5, when the AC electric power of which value is G is generated in each of the above-mentioned three amperages, the generating efficiency of generator 40 varies to eta 1, 2 and 3, respectively. Specifically, the generating efficiency of generator 40 corresponding G of curve A is greater than the generating efficiency of generator 40 corresponding G of curve C by delta (eta), that is, by (eta 1 - eta 3). Accordingly, automotive generator 40 can always generate the AC electric power with the best generating efficiency by selectively varying amperage of the DC electric power supplied from DC power source 91 to the field coil of generator 40. Therefore, amperage control circuit 90 is designed to be able to control amperage of the DC electric power which is supplied from DC power source 91 to the field coil of generator 40 in order to let generator 40 always generate the AC electric power with the best generating efficiency during the period of the operation of generator 40.

In the event, the fuel consumption of the automotive engine is effectively reduced when brushless motor 21a of compressor 21 is driven by receiving the rectified electric power through circuit 30 from automotive generator 40.

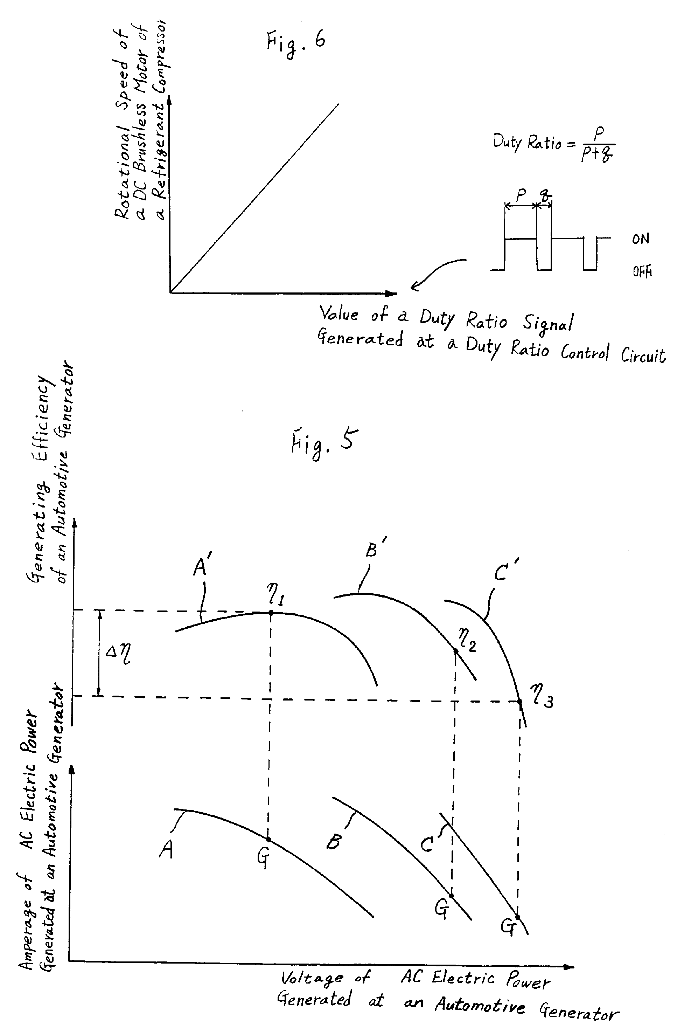

When plug 61 is inserted in commercial AC power source 60, that is, the electromagnetic device of electromagnetic changeover switch 50 is energized so as to supply the commercial AC electric power to circuit 30, duty ratio control circuit 80 receives the third signal which represents that the electromagnetic device is energized from arithmetic circuit 70. Simultaneously, duty ratio control circuit 80 also receives the fourth signal from arithmetic circuit 70. When duty ratio control circuit 80 receives the third signal representing that the electromagnetic device is energized from arithmetic circuit 70, duty ratio control circuit 80 generates the duty ratio signal as the fifth signal of which value is varied in response to change in the fourth signal, and then sends the fifth signal to circuit 30 therefrom. When circuit 30 receives the various value of the duty ratio signal from duty ratio control circuit 80, the rectified electric power is supplied to DC brushless motor 21a from circuit 30 with intermission of which value is varied in response to change in the value of the duty ratio signal. Therefore, the rotational speed of DC brushless motor 21a varies in response to change in the value of the duty ratio signal as shown in Figure 6.

Accordingly, in both during the period when the automobile stops and during the period when the automobile is driven, output of compressor 21 is varied in response to change in the rotational speed of DC brushless motor 21a of compressor 21. Thereby, the temperature in the refrigerator compartment is controlled by virtue of varying the rotational speed of DC brushless motor 21a of compressor 21 so that the accurate temperature control in the refrigerator compartment can be carried out.

## Claims

1. A system for driving a refrigerant compressor (21b) in a refrigerator system for use in a vehicle having an engine (101), which comprises:
an electric generator (40) to be mounted on said vehicle and driven by said engine for generating AC electric power,
selecting means (50) having a first input port (50b) coupled to said electric generator for receiving AC electric power therefrom, a second input port (50c) to be connected to an AC electric power source (60) external of the vehicle for receiving AC electric power therefrom and an output port (50a), said selecting means selecting either electric power from said generator or AC electric power from said external AC electric power source to deliver the selected AC electric power to said output port; and characterised by
rectifying means (30) coupled to said output port of the selecting means for rectifying said selected AC electric power to produce DC electric power;
a DC electric motor (21a) to be driven by said DC electric power and mechanically coupled to said refrigerant compressor (21b);
sensing means (71) for sensing a temperature within a refrigerator compartment mounted on said vehicle, said sensing means producing a first signal which represents said sensed temperature of said refrigerator compartment;
setting means (72) for setting a temperature of said refrigerator compartment, said setting means producing a second signal which represents said set temperature of said refrigerator compartment;
calculating means (70) coupled to said sensing means, said setting means and said selecting means so as to receive said first and second signals and a third signal which indicates which of said AC electric power from said electric generator or said AC electric power from said external AC electric power source is delivered as the selected AC electric power to said output port, said calculating means calculating a differential between said sensed temperature of said refrigerator compartment and said set temperature of said refrigerator compartment, and producing a fourth signal representing said differential between said sensed temperature of said refrigerator compartment and said set temperature of said refrigerator compartment,
duty ratio control means (80) coupled to said calculating means (70) for receiving said third and fourth signals, said duty ratio control means including pulsating means for producing a pulse as a fifth signal, the duty ratio of the pulses being varied in response to change in said fourth signal when said duty ratio control means (80) receives said third signal indicating that said AC electric power from said external AC electric power source is delivered to said output port, said duty ratio being maintained at 100% when said duty ratio control means receives said third signal representing that the AC electric power from said electric generator is delivered to said output port; and
delivering means (included in 30) coupled to said duty ratio control means (80) for receiving said fifth signal, said delivering means delivering said DC electric power to said DC motor with intermissions, the duration of which is varied in response to change in said duty ratio.

2. A system as claimed in claim 1, characterised in that said calculating means (70) are further coupled to said DC motor (21a) so as to receive a sixth signal representing a rotational speed of said DC motor so that said calculating means produces said fourth signal in consideration of said sixth signal.

3. A system as claimed in claim 1 or 2, characterised by amperage control means (90) coupled to said calculating means (70) for receiving said third and fourth signals, said amperage control means being further coupled to said electric generator (40) so as to control a direct current supplied to a field coil thereof in response to said fourth signal.

4. A system as claimed in Claim 3, wherein said delivering means (30) is coupled to said amperage control means (90) so as to send a seventh signal representing a voltage of said DC electric power so that said amperage control means controls said field current in response to both said fourth signal and said seventh signal.

## Patentansprüche

1. System zum Antreiben eines Kühlkompressor (21b) in einem Kühlsystem zur Benutzung in einem Fahrzeug mit einem Motor (101), das aufweist:
einen auf dem Fahrzeug angetriebenen Generator (40), der von dem Motor zum Erzeugen einer elektrischen Wechselstromleistung angetrieben wird,
Auswahlmittel (50) mit einem ersten Eingangsanschluß (50b), der mit dem elektrischen Generator zum Aufnehmen von elektrischer Wechselstromleistung davon verbunden ist, einem zweiten Eingangsanschluß (50c), der mit einer elektrischen Wechselstromquelle (60) außerhalb des Fahrzeuges zum Aufnehmen von elektrischer Wechselstromleistung davon zu verbinden ist, und einem Ausgangsanschluß (50a), wobei das Auswahlmittel entweder elektrische Leistung von dem Generator oder elektrische Wechselstromleistung von der externen elektrischen Wechselstromquelle zum Liefern der ausgewählten elektrischen Wechselstromleistung an den Ausgangsanschluß auswählt;
gekennzeichnet durch:
Gleichrichtermittel (30), das mit dem Ausgangsanschluß des Auswahlmittels zum Gleichrichten der ausgewählten elektrischen Wechselstromleistung zum Erzeugen elektrischer Gleichstromleistung verbunden ist;
einen elektrischen Gleichstrommotor (21a), der von der elektrischen Gleichstromleistung anzutreiben ist und mechanisch mit dem Kühlkompressor (21b) verbunden ist;
Erfassungsmittel (71) zum Erfassen einer Temperatur innerhalb eines Kühlabteiles, das auf dem Fahrzeug angebracht ist, wobei das Erfassungsmittel ein erstes Signal erzeugt, das die erfaßte Temperatur des Kühlabteiles darstellt;
Einstellmittel (72) zum Einstellen einer Temperatur des Kühlabteiles, wobei das Einstellmittel ein zweites Signal erzeugt, das die eingestellte Temperatur des Kühlabteiles darstellt;
Berechnungsmittel (70), das mit dem Erfassungsmittel, dem Einstellmittel und dem Auswahlmittel so verbunden ist, daß es das erste und zweite Signal und ein drittes Signal empfängt, das anzeigt, welche von der elektrischen Wechselstromleistung von dem elektrischen Generator oder der elektrischen Wechselstromleistung von der externen elektrischen Wechselstromquelle als die ausgewählte elektrische Leistung zu dem Ausgangsanschluß geliefert wird, wobei das Berechnungsmittel einen Unterschied zwischen der erfaßten Temperatur des Kühlabteiles und der eingestellten Temperatur des Kühlabteiles berechnet und ein viertes Signal erzeugt, das den Unterschied zwischen der erfaßten Temperatur des Kühlabteiles und der eingestellten Temperatur des Kühlabteiles darstellt;
Einschaltdauersteuermittel (80), das mit dem Berechnungsmittel (70) zum Empfangen des dritten und vierten Signales verbunden ist, wobei das Einschaltdauersteuermittel Pulsmittel zum Erzeugen eines Pulses als fünftes Signal enthält, die Einschaltdauer des Pulses als Reaktion auf die Änderung in dem vierten Signal variiert wird, wenn das Einschaltdauersteuermittel (80) das dritte Signal empfängt, das anzeigt, daß die elektrische Wechselstromleistung von der externen elektrischen Wechselstromquelle an den Ausgangsanschluß geliefert wird, wobei die Einschaltdauer bei 100 Prozent gehalten wird, wenn das Einschaltdauersteuermittel das dritte Signal empfängt, das darstellt, daß die elektrische Wechselstromleistung von dem elektrischen Generator an den Ausgangsanschluß geliefert wird; und
Liefermittel (in 30 enthalten), das mit dem Einschaltdauersteuermittel (80) verbunden ist zum Empfangen des fünften Signales, wobei das Liefermittel die elektrische Gleichstromleistung an den Gleichstrommotor mit Unterbrechungen liefert, deren Dauer als Reaktion auf die Änderung in der Einstelldauer variiert wird.

2. System nach Anspruch 1, dadurch gekennzeichnet, daß das Berechnungsmittel (70) weiter mit dem Gleichstrommotor (21a) so verbunden ist, daß es ein sechstes Signal empfängt, das eine Drehzahl des Gleichstrommotors darstellt, so daß das Berechnungsmittel das vierte Signal unter Berücksichigung des sechsten Signales erzeugt.

3. System nach Anspruch 1 oder 2, gekennzeichnet durch ein Stromsteuermittel (90), das mit dem Berechnungsmittel (79) verbunden ist zum Empfangen des dritten und vierten Signales, wobei das Stromsteuermittel weiter mit dem elektrischen Generator (40) so verbunden ist, daß ein Gleichstrom gesteuert wird, der an eine Feldspule davon angelegt wird, als Reaktion auf das vierte Signal.

4. System nach Anspruch 3, bei dem das Liefermittel (30) mit dem Stromsteuermittel (90) so verbunden ist, daß ein siebentes Signal gesendet wird, das eine Spannung der elektrischen Gleichstromleistung darstellt, so daß das Stromsteuermittel den Feldstrom als Reaktion auf sowohl das vierte als auch das siebente Signal steuert.

## Revendications

1. Système d'entraînement d'un compresseur de réfrigérant (21b) dans un système frigorifique destiné à être utilisé dans un véhicule muni d'un moteur (101), comprenant :
- un générateur électrique (40) devant être monté sur le véhicule et entraîné par le moteur pour générer de la puissance électrique alternative,
- des moyens de sélection (50) comportant un premier orifice d'entrée (50b) couplé au générateur électrique pour recevoir la puissance électrique alternative de celui-ci, un second orifice d'entrée (50c) devant être branché à une source de puissance électrique alternative (60) extérieure au véhicule pour recevoir la puissance électrique alternative de celle-ci, et un orifice de sortie (50a), ces moyens de sélection sélectionnant soit la puissance électrique alternative provenant du générateur soit la puissance électrique alternative provenant de la source de puissance électrique alternative extérieure, pour fournir à l'orifice de sortie la puissance électrique à courant alternatif sélectionnée ; et caractérisé par
- des moyens de redressement (30) couplés à l'orifice de sortie des moyens de sélection pour redresser la puissance électrique à courant alternatif sélectionnée, de manière à produire une puissance électrique à courant continu ;
- un moteur électrique à courant continu (21a) devant être entraîné par la puissance électrique à courant continu et couplé mécaniquement au compresseur de réfrigérant (21b) ;
- des moyens de détection (71) pour détecter une température à l'intérieur du compartiment frigorifique monté sur le véhicule, ces moyens de détection produisant un premier signal représentant la température détectée du compartiment frigorifique ;
- des moyens de réglage (72) pour régler une température du compartiment frigorifique, ces moyens de réglage produisant un second signal représentant la température de réglage du compartiment frigorifique ;
- des moyens de calcul (70) couplés aux moyens de détection, aux moyens de réglage et aux moyens de sélection pour recevoir le premier signal, le second signal, et un troisième signal indiquant laquelle de la puissance électrique alternative provenant du générateur électrique ou de la puissance électrique alternative provenant de la source de puissance électrique alternative extérieure, est fournie à l'orifice de sortie comme puissance électrique alternative sélectionnée, ces moyens de calcul calculant la différence entre la température détectée du compartiment frigorifique et la température de réglage de ce compartiment frigorifique, de manière à produire un quatrième signal représentant la différence entre la température détectée du compartiment frigorifique et la température de réglage de ce compartiment frigorifique ;
- des moyens de commande de taux d'occupation (80) couplés aux moyens de calcul (70) pour recevoir le troisième signal et le quatrième signal, ces moyens de commande de taux d'occupation comprenant des moyens pulsatoires pour produire une impulsion constituant un cinquième signal, le taux d'occupation des impulsions étant soumis à des variations en réponse aux variations du quatrième signal lorsque les moyens de commande de taux d'occupation (80) reçoivent le troisième signal indiquant que la puissance électrique alternative provenant de la source de puissance électrique alternative extérieure est fournie à l'orifice de sortie, le taux d'occupation étant maintenu à 100 % lorsque les moyens de commande de taux d'occupation reçoivent le troisième signal indiquant que la puissance électrique alternative provenant du générateur électrique est fournie à l'orifice de sortie ; et
- des moyens de distribution (inclus dans 30) couplés aux moyens de commande de taux d'occupation (80) pour recevoir le cinquième signal, ces moyens de distribution fournissant la puissance électrique à courant continu au moteur à courant continu avec des interruptions dont on fait varier la durée en réponse aux variations du taux d'occupation.

2. Système selon la revendication 1, caractérisé en ce que les moyens de calcul (70) sont en outre couplés au moteur à courant continu (21a) pour recevoir un sixième signal représentant la vitesse de rotation du moteur à courant continu, de façon que les moyens de calcul produisent le quatrième signal en tenant compte du sixième signal.

3. Système selon l'une quelconque des revendications 1 et 2, caractérisé par des moyens de commande d'intensité (90) couplés aux moyens de calcul (70) pour recevoir le troisième signal et le quatrième signal, ces moyens de commande d'intensité étant en outre couplés au générateur électrique (40) pour commander un courant continu fourni à une bobine d'inducteur de ce générateur en réponse au quatrième signal.

4. Système selon la revendication 3, caractérisé en ce que les moyens de distribution (30) sont couplés aux moyens de commande d'intensité (90) pour émettre un septième signal représentant une tension de la puissance électrique à courant continu, de façon que les moyens de commande d'intensité commandent le courant de champ de la bobine d'inducteur en réponse à la fois au quatrième signal et au septième signal.
